Europäisches Patentamt

European Patent Office

Office européen des brevets

(19)

(11) Publication number: **0 176 204**
**A1**

(12) **EUROPEAN PATENT APPLICATION**

(21) Application number: **85305703.2**

(22) Date of filing: **12.08.85**

(51) Int. Cl.⁴: **B 25 J 17/02**
**B 25 J 9/12, F 16 D 59/02**

(30) Priority: **15.09.84 GB 8423388**

(43) Date of publication of application:
**02.04.86 Bulletin 86/14**

(84) Designated Contracting States:
**AT BE CH DE FR GB IT LI LU NL SE**

(71) Applicant: **Lamb-Sceptre Design Centre Limited**
**Leyton Avenue**
**Mildenhall Suffolk IP28 7BL(GB)**

(72) Inventor: **Pigott, Norman Brian**
**95 Parsonage Lane**
**Bishop's Stortford Herfordshire(GB)**

(74) Representative: **Matthews, Heather Clare et al,**
**Keith W Nash & Co Pearl Assurance House 90-92 Regent**
**Street**
**Cambridge CB2 1DP(GB)**

(54) **Joint for a robotic arm.**

(57) A robot arm joint has a brake which operates to prevent movement in the joint. The brake is normally electromagnetically operated but can be manually released (40). When the brake is released, the joint can be manoeuvred manually, by engaging a tool with an accessible shaft (20).

EP 0 176 204 A1

./...

Fig. 1

Title:  Joint for a Robotic Arm

Field of the invention

This invention relates to a joint or a robotic arm which can be used between two limbs of the arm of a robot or between a fixed surface and an arm.  The joint permits rotation about a single axis, and more than one such joint can be combined where necessary to produce complex joints permitting more degrees of freedom.

Background to the invention

It is conventional to provides brakes in joints of this type so that the joint can be locked when a desired rotational position has been achieved.  Such brakes need to be locked when motive power is removed from the robot arm.

Summary of the invention

According to the present invention, there is provided a joint for a robotic arm, the joint having two output members, a shaft driven by a motor for driving one output member relative to the other about the axis of the shaft, an electromagnetic brake for braking the shaft, means for manually releasing the brake and means for allowing manual rotation of the shaft when the brake is released.

The two output members of the joint are preferably flanges which can be attached to suitable mating flanges either on a fixed support or at an end of an arm to be articulated by the joint. The flanges may be at right angles to one another, or at any other desired angle to one another.

The motor is preferably an electric motor, and the motor and the brake are preferably arranged in a common circuit so that when current is removed from the motor, current is also removed from the brake which thereupon takes up a 'locked' condition.

The brake can conveniently be a disc brake which has a brake disc rotationally fast with the shaft and which can be clamped between two facing surfaces, one of the surfaces being movable towards and away from the other surface. The brake preferably includes a spring which biases the brake to a locked position in the absence of current energising the electromagnet.

The means for manually releasing the brake make comprise a lever which can be used to compress the spring in the brake and thereby to release the grip of the brake on the shaft.

An end of the shaft may have a squared box which can be engaged by a tool to permit the shaft to be turned manually.

The brake may be mounted within a housing of the joint, and the brake-releasing lever may include a handle projecting out of the housing. The handle may be removed when it is not required so that no obstruction is present outside the housing.

Similarly, the square end of the shaft may be accessible through a hole in the housing, the hole normally being

- 3 -

covered by a cap which can be removed when access is required to the squared end.

Such a joint allows a robotic arm with the joint to be manouvred manually whilst the power to the arm is off, so that various positions of the arm can be established more faithfully than would otherwise be the case. This arises from the fact that if the power is on, the torque exerted by the motor may resist any attempt to move the arm attached to the joint. Furthermore, with the power on adjustment of the arm is quite dangerous since in the event of a circuit failure or inadvertent generation of a control signal, the motor might operate causing the operator to be injured.

Furthermore, it is possible to retract an arm from a fault condition using mechanical means only without the need for electrical motive power. This is important in the event of electrical failure since it allows a maintenance engineer to move robot arms out of the way of apparatus on which the arms were operating at the time of the power failure.

Brief Description of the Drawings

The invention will now be further described, by way of example, with reference to the accompanying drawings, in which:

Figure 1 is a side view, partly in section, of part of a robotic arm joint in accordance with the invention;

Figure 2 is a perspective view of a brake unit; and

- 4 -

Figure 3 is a side elevation of a complete joint.

Description of a preferred embodiment

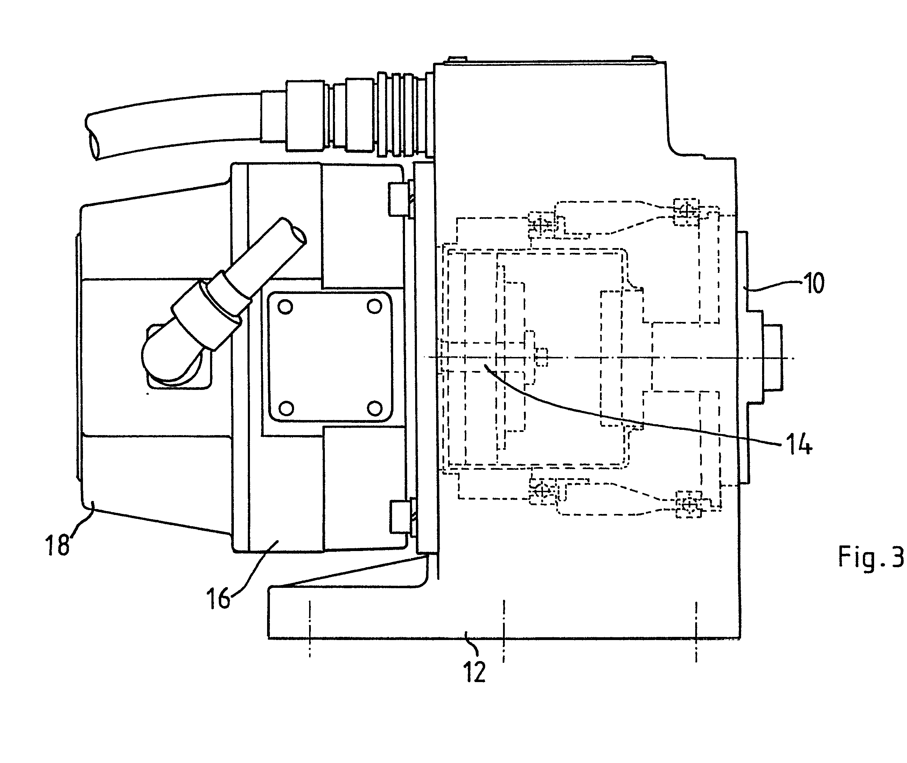

Looking first at Figure 3, the joint has a first face plate 10 which forms an output member to which a robot arm can be attached and a second face plate 12 which also forms an output member by means of which the joint can be attached to another component. The joint has a shaft 14 the axis of which defines the axis of rotation of the joint, and the face plate 10 can be rotated relative to the face plate 12 about the axis of the shaft 14. The shaft 14 is driven by an electric motor in a housing 16, and a brake is located in a bell housing 18 at the left hand end of the joint.

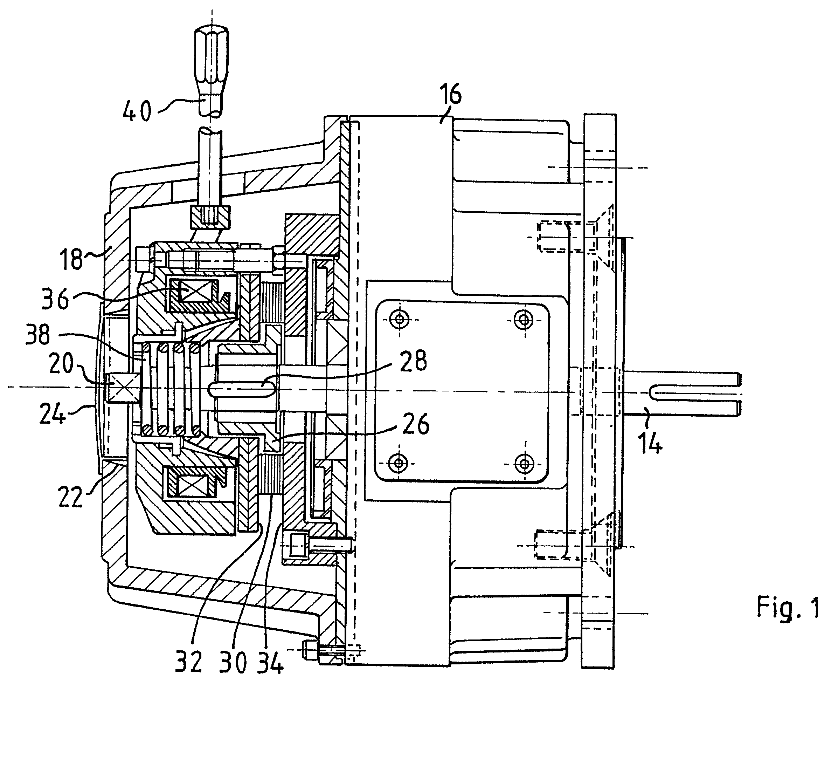

Referring now to Figure 1, it will be seen that the shaft 14 extends through the motor housing 16 and through the brake housing 18 to end in a squared boss 20. This boss is accessible through an opening 22 in the end of the housing 18, but in the drawing this opening 22 is shown closed by a removable cover plate 24. When the cover plate 24 is removed, a socket or spanner can be placed on the squared boss 20 to turn the shaft 14.

The brake itself comprises a hub 26 which is keyed to the shaft 14 by means of a key 28. The hub 26 supports a disc 30 of friction material, and in the 'brake operating' position shown in Figure 1, the disc 30 is clamped between plates 32 and 34. Since the brake disc 30 is clamped, the shaft 14 cannot turn.

The brake itself comprises an electro-magnet coil winding 36 which, when energised, pulls the plate 32 away from the friction disc 30, to release the brake. When the coil 36 is not energised, a helical compression spring 38 acts to press the plate 32 against the friction disc 30, and thus to clamp the disc 30 between the plates 32 and 34.

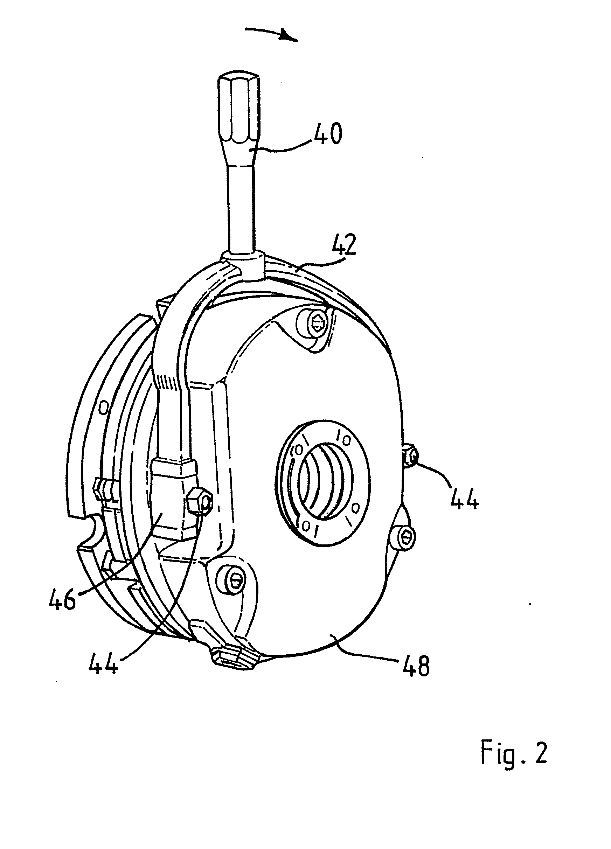

A handle 40 is provided for manual operation, and is shown in more detail in Figure 2. The handle is attached to a yoke 42, the ends of which are supported on studs 44. When the handle 40 is swung forwards (or backwards) the ends of the yoke bear against a surface 46 on the brake casing 48, and draw the studs forwards. This causes the spring 38 inside the brake to be compressed and therefore releases the brake disc 30.

The handle 40 extends out of the housing 18 through a slot 50. The handle itself can be unscrewed from the yoke 42 when manual operation is not needed, and can be replaced when manual operation is needed. This prevents the handle 40 from being an obstruction.

Whilst the handle 40 is being operated, to release the shaft 14, the squared boss 20 can be turned using a suitable tool.

The brake unit itself can be a proprietary item and a suitable unit is sold under the name KEB Combistop.

Where this joint is used, an operator can teach a robot to perform individual motions whilst the operator himself occupies a position of close proximity to the robot without putting himself at risk. By mechanically releasing the brakes whilst the motive power to the arm is off, the arm can be moved at will using the square shaft end 20 without any risk of the robot itself suddenly becoming active.

Power for the processor which controls the robot and motive power for actually moving the arm must of course be separately disconnectable so that the motive power (controlling the motor and the brake) can be switched off leaving the processor connected. Whilst the processor is connected to power, the memory in the processor associated with the arm will register the positions of the arm and when the desired positions of the arm are obtained the information relating to the actual position of the arm at that stage can be recorded by a suitable control signal applied to the memory circuits. In this way the operator can teach the robot the individual positions to which it must move during its operating procedure with minimal risk.

CLAIMS

1.  A joint for a robotic arm, the joint having two output members (10, 12), a shaft (14) driven by a motor for driving one output member (10) relative to the other (12) about the axis of the shaft, an electromagnetic brake (36) for braking the shaft, means (40) for manually releasing the brake, and means (20) for allowing manual rotation of the shaft when the brake is released.

2.  A joint as claimed in Claim 1, wherein the two output members of the joint are flanges (10, 12) which can be attached to suitable mating flanges either on a fixed support or at an end of an arm to be articulated by the joint.

3.  A joint as claimed in Claim 1 or Claim 2, wherein the motor is an electric motor, and the motor and the brake are arranged in a common circuit so that when current is removed from the motor, current is also removed from the brake which thereupon takes up a 'locked' condition.

4.  A joint as claimed in any preceding claim, wherein the brake is a disc brake which has a brake disc (30) rotationally fast with the shaft (14) and which can be clamped between two facing surfaces (32, 34), one of the surfaces (32) being movable towards and away from the other surface (34).

5.  A joint as claimed in Claim 4, wherein the brake includes a spring (38) which biases the brake to a locked position in the absence of current energising an

0176204

electromagnet.

6.  A joint as claimed in Claim 5, wherein the means for manually releasing the brake comprises a lever (40, 42) which can be used to compress the spring (38) in the brake and thereby to release the grip of the brake on the shaft.

7.  A joint as claimed in Claim 6, wherein the brake is mounted within a housing (18) of the joint, and the brake-releasing lever includes a handle (40) projecting out of the housing.

8.  A joint as claimed in Claim 7, wherein the handle (40) may be removed when it is not required so that no obstruction is present outside the housing.

9.  A joint as claimed in any preceding claim, wherein an end of the shaft (14) has a squared boss (20) which can be engaged by a tool to permit the shaft to be turned manually.

10.  A joint as claimed in Claim 9, wherein the squared end (20) of the shaft (14) is accessible through a hole (22) in a housing (18), the hole normally being covered by a cover (24) which can be removed when access is required to the squared end.

Fig. 1

Fig. 2

Fig. 3

0176204

European Patent
Office

**EUROPEAN SEARCH REPORT**

0176204
Application number

EP 85 30 5703

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | EP-A-0 093 888 (WESTINGHOUSE ELECTRIC CORP.) * Page 7, lines 9-18, 34-37; page 8, line 1 * | 1-3,5, 6,8 | B 25 J 17/02 B 25 J 9/12 F 16 D 59/02 |
| P,Y | EP-A-0 146 783 (WESTINGHOUSE ELECTRIC CORP.) * Page 12, lines 4-25 * | 1-6,8 | |
| Y | DE-A-2 934 396 (TORNADO ELEKTROMOTORENFABRIK GmbH) * Page 9, lines 1-14 * | 1-8 | |
| A | FR-A-2 398 347 (S.A. CROUZET) * Page 3, lines 27-29 * | 1,4 | |
| A | CH-A- 461 193 (SIEMENS AG) * Column 2, line 28 - column 3, line 9 * | 1-8,10 | TECHNICAL FIELDS SEARCHED (Int. Cl 4) |
| A | DE-A-2 249 440 (FRÖHLICH et al.) * Figure 3 * | 9 | B 25 J F 16 D |
| A,P | FR-A-2 559 283 (UNIVERSITE DE LIMOGES) | | |
| A | GB-A-2 113 650 (ALSTHOM-ATLANTIQUE) * Figures 2,3 * | 9 | |

--- -/-

The present search report has been drawn up for all claims

| Place of search THE HAGUE | Date of completion of the search 02-01-1986 | Examiner LAMMINEUR P.C.G. |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | EP-A-0 050 561 (COMMISSARIAT A L'ENERGIE)<br>* Page 13, line 33 - page 14, line 7 * | 8-10 | |
| | ----- | | |
| | | | **TECHNICAL FIELDS SEARCHED (Int. Cl.4)** |

The present search report has been drawn up for all claims

| Place of search<br>THE HAGUE | Date of completion of the search<br>02-01-1986 | Examiner<br>LAMMINEUR P.C.G. |
|---|---|---|